(19) Europäisches Patentamt
European Patent Office
Office européen des brevets

(11) **EP 2 893 668 B1**

(12) **EUROPÄISCHE PATENTSCHRIFT**

(45) Veröffentlichungstag und Bekanntmachung des Hinweises auf die Patenterteilung:
**12.09.2018 Patentblatt 2018/37**

(51) Int Cl.:
***H04L 9/14*** *(2006.01)*    ***H04L 9/30*** *(2006.01)*
***H04L 9/32*** *(2006.01)*    ***H04L 9/08*** *(2006.01)*

(21) Anmeldenummer: **13739946.5**

(22) Anmeldetag: **22.07.2013**

(86) Internationale Anmeldenummer:
**PCT/EP2013/002157**

(87) Internationale Veröffentlichungsnummer:
**WO 2014/037070 (13.03.2014 Gazette 2014/11)**

(54) **VERFAHREN ZUR ERSTELLUNG EINER ABGELEITETEN INSTANZ EINES ORIGINALDATENTRÄGERS**

METHOD FOR GENERATING A DERIVED AUTHORITY FROM AN ORIGINAL DATA CARRIER

PROCEDE DE CREATION D'UNE INSTANCE DERIVEE D'UN SUPPORT DE DONNEES D'ORIGINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.09.2012 DE 102012017826**

(43) Veröffentlichungstag der Anmeldung:
**15.07.2015 Patentblatt 2015/29**

(73) Patentinhaber: **Giesecke+Devrient Mobile Security GmbH**
**81677 München (DE)**

(72) Erfinder:
• **MEISTER, Gisela**
**81737 München (DE)**
• **URMANN, Jens**
**69121 Heidelberg (DE)**

(56) Entgegenhaltungen:
**EP-A2- 1 113 617**

• **Tanenbaum A S et. al: "Distributed Systems - Principles and Paradigms", 31. Dezember 2007 (2007-12-31), Pearson Prentice Hall, Upper Saddle River, NJ 07458, XP002715059, ISBN: 0-13-239227-5 Seite 437 - Seite 439**

EP 2 893 668 B1

**Beschreibung**

Die Erfindung betrifft ein Verfahren zur Erstellung einer von einem Originaldatenträger abgeleiteten Instanz, einen entsprechenden Originaldatenträger sowie eine davon abgeleitete Instanz.

Portable Datenträger werden vielfach als Sicherheitsdokumente verwendet, beispielsweise in Form eines Personalausweises, eines Reisepasses, einer Signaturkarte oder dergleichen. Dabei verfügen moderne Sicherheitsdokumente mittlerweile vielfach über einen Speicher und einen Prozessor und sind dazu eingerichtet, Sicherheitsapplikationen auszuführen. Anwendungsbeispiele für solche Sicherheitsapplikationen sind eine Authentisierung gegenüber einem Terminal, die Herstellung eines gesicherten Datenkommunikationskanals, das elektronische Signieren von Daten sowie das Verifizieren von Signaturen und dergleichen. Auf diese Weise können solche Datenträger dazu eingesetzt werden, mit beliebigen Dienstanbietern zu interagieren, um sich beispielsweise für elektronische Transaktionen, z.B. über das Internet, zu authentisieren und diese auf gesicherte Weise durchzuführen. Weiter können die Sicherheitsdokumente zum Speichern von Daten, wie z.B. persönlichen und/oder sicherheitsrelevanten Daten sowie sonstigen Nutzdaten, eingesetzt werden und beispielsweise Zugangskontrollsysteme unterstützen.

Verlust oder Diebstahl eines solchen portablen Datenträgers kann für den Nutzer sehr nachteilig sein. Zum einen ist der Nutzer dann in seinem Handeln unmittelbar eingeschränkt und zum anderen besteht die Gefahr, dass Dritte zumindest temporär und in unberechtigter Weise den möglicherweise entwendeten Datenträger zum Schaden des eigentlich Berechtigten nutzen. Weiter besteht auch für den eigentlichen Nutzer bei dauerhafter Verwendung des Datenträgers im täglichen Leben die Gefahr von Abnutzung und Verschleiß.

Tanenbaum A S et al. "Distributed Systems - Principles and Paradigms" beschreibt ein Delegierungsverfahren mit den Merkmalen des Oberbegriffs von Anspruch 1. In EP 1113617 wird eine Zwischeninstanz für die Übertragung verschlüsselter Nachrichten vorgesehen.

Aufgabe der vorliegenden Erfindung ist es, den vorstehenden Nachteilen Rechnung zu tragen.

Diese Aufgabe wird durch Verfahren und Vorrichtungen mit den Merkmalen der nebengeordneten Ansprüche gelöst. Vorteilhafte Ausgestaltungen und Weiterbildungen sind in den abhängigen Ansprüchen angegeben.

Die Erfindung basiert auf dem Ansatz, eine von einem Originaldatenträger, beispielsweise einem Personalausweis, mittels eines nachstehend im Detail beschriebenen Verfahrens abgeleitete Instanz bereitzustellen. Die Erstellung der abgeleiteten Instanz wird dabei vorzugsweise von einer vertrauenswürdigen Instanz, beispielsweise einem so genannten "Trusted Service Manager", überwacht und zertifiziert. Die abgeleitete Instanz kann dann von dem Nutzer im Wesentlichen anstelle des Originaldatenträgers eingesetzt werden. D.h. jedwede Transaktion, welche ursprünglich gegenüber einem Dienstanbieter mittels des Originaldatenträgers durchgeführt werden konnte, kann nun mittels einer abgeleiteten Instanz erfolgen. Dabei ist es möglich und auch vorgesehen, für verschiedene, mittels des Originaldatenträgers durchführbare Transaktionen jeweils verschiedene, auf einzelne oder eine kleine Teilmenge der Transaktionen beschränkte abgeleitete Instanzen zu erstellen.

Gemäß einem ersten Aspekt der Erfindung wird ein Verfahren zur Erstellung einer von einem Originaldatenträger abgeleiteten Authentisierungsinstanz bereitgestellt, wobei der Originaldatenträger ein für den Originaldatenträger individuelles Schlüsselpaar, welches einen öffentlichen Schlüssel PKO und einen geheimen Schlüssel SKO des Originaldatenträgers umfasst, sowie ein Zertifikat Cert(PKO) über den öffentlichen Schlüssel PKO des Originaldatenträgers aufweist. Das Verfahren umfasst die folgenden Schritte: Ableiten eines geheimen Schlüssels SKA für die abgeleitete Authentisierungsinstanz aus dem geheimen Schlüssel SKO des Originaldatenträgers durch den Originaldatenträger; Bilden von Ableitungsdaten für die abgeleitete Authentisierungsinstanz; Übertragen von Authentisierungsdaten an die abgeleitete Authentisierungsinstanz, wobei die Authentisierungsdaten die Ableitungsdaten g1, Sig(g1), das Zertifikat Cert(PKO) des öffentlichen Schlüssels PKO des Originaldatenträgers sowie ein abgeleitetes Schlüsselpaar aufweisen, welches den abgeleiteten geheimen Schlüssel SKA und den öffentlichen Schlüssel PKO des Originaldatenträgers umfasst.

Vorzugsweise ist der öffentliche Schlüssel des Originaldatenträgers in der abgeleiteten Authentisierungsinstanz vorgesehen, um im Rahmen einer Authentisierung mit der abgeleiteten Authentisierungsinstanz als der öffentliche Schlüssel PKO der abgeleiteten Authentisierungsinstanz behandelt zu werden.

Gemäß bevorzugter Ausführungsformen ist das Schlüsselpaar des Originaldatenträgers für eine Authentisierung nach einem ersten Authentisierungsprotokoll vorgesehen und das Schlüsselpaar der abgeleiteten Authentisierungsinstanz für eine Authentisierung nach einem abgeleiteten Authentisierungsprotokoll vorgesehen, in welchem unveränderte Schritte des ersten Authentisierungsprotokolls mit dem öffentlichen Schlüssel PKO des Originaldatenträgers ausgeführt werden.

Vorzugsweise ist das Verfahren durch die folgenden weiteren Schritte gekennzeichnet Auslesen von Daten aus dem Originaldatenträger durch eine vertrauenswürdige Instanz nach einem Authentisieren des Originaldatenträgers gegenüber der vertrauenswürdigen Instanz; Authentisieren der abgeleiteten Authentisierungsinstanz gegenüber der vertrauenswürdigen Instanz unter Verwendung der übertragenen Authentisierungsdaten; und Übertragen der aus dem Originaldatenträger ausgelesenen Daten an die abgeleitete Authentisierungsinstanz durch die vertrauenswürdige Instanz.

Gemäß bevorzugter Ausführungsformen leitet der Originaldatenträger den geheimen Schlüssel SKA für die abgeleitete Authentisierungsinstanz aus dem geheimen Schlüssel SKO des Originaldatenträgers ab unter Verwendung einer Zufallszahl RND1, vorzugsweise durch Multiplikation mit der Zufallszahl RND1.

Vorzugsweise bestimmt der Originaldatenträger einen Ableitungsparameter g1 und überträgt diesen an die vertrauenswürdige Instanz, welcher zumindest einen Teil der Ableitungsdaten g1, Sig(gl) bildet.

Gemäß bevorzugter Ausführungsformen verwendet der Originaldatenträger als Ableitungsparameter eine abgeleitete Basis g1, die mittels einer Exponentiation der vorgegebenen Basis g mit dem Reziproken der Zufallszahl RND1 gebildet und an die vertrauenswürdige Instanz übertragen wird, welche dann ein Anteil der an die abgeleitete Authentisierungsinstanz zu übertragenden Authentisierungsdaten sind.

Vorzugsweise umfassen die Ableitungsdaten g1, Sig(gl) eine digitale Signatur, vorzugsweise eine Schnorr-Signatur, des Ableitungsparameters g1.

Gemäß bevorzugter Ausführungsformen wird die digitale Signatur Sig(gl) über den vom Originaldatenträger gebildeten Ableitungsparameter in Form der abgeleiteten Basis g1 unter Verwendung des geheimen Schlüssels SKO des Originaldatenträgers gebildet.

Vorzugsweise ist das Verfahren weiter gekennzeichnet durch den im Rahmen des Authentisierens der abgeleiteten Authentisierungsinstanz gegenüber einem Authentisierungspartner durchgeführten Schritt des Vereinbarens eines Kommunikationsschlüssels KKI, KKA zwischen der abgeleiteten Authentisierungsinstanz und dem Authentisierungspartner, vorzugsweise mittels eines Diffie-Hellman-Schlüsselaustauschverfahrens, auf der Basis des öffentlichen Schlüssels PKO und des geheimen Schlüssels SKA der abgeleiteten Authentisierungsinstanz sowie eines öffentlichen Sitzungsschlüssels PKI und eines geheimen Sitzungsschlüssels SKI des Authentisierungspartners, wobei der öffentliche Sitzungsschlüssel PKI der vertrauenswürdigen Instanz mittels Exponentiation des Ableitungsparameters g1 mit dem geheimen Sitzungsschlüssel SKI des Authentisierungspartners bestimmt wird.

Gemäß bevorzugter Ausführungsformen ist das Verfahren weiter gekennzeichnet durch den im Rahmen des Authentisierens des Originaldatenträgers gegenüber der vertrauenswürdigen Instanz durchgeführten Schritt des Vereinbarens eines Kommunikationsschlüssels KKO, KKI zwischen dem Originaldatenträger und der vertrauenswürdigen Instanz, vorzugsweise mittels eines Diffie-Hellman-Schlüsselaustauschverfahrens, auf der Basis des öffentlichen Schlüssels PKO und des geheimen Schlüssels SKO des Originaldatenträgers sowie eines öffentlichen Sitzungsschlüssels PKI und eines geheimen Sitzungsschlüssels SKI der vertrauenswürdigen Instanz, wobei der öffentliche Schlüssel PKO des Originaldatenträgers mittels Exponentiation einer vorgegebenen Basis g mit dem geheimen Schlüssel SKO des Originaldatenträgers bestimmt wird und der öffentliche Sitzungsschlüssel PKI der vertrauenswürdigen Instanz mittels Exponentiation der vorgegebenen Basis g mit dem geheimen Sitzungsschlüssel SKI der vertrauenswürdigen Instanz bestimmt wird.

Vorzugsweise überträgt zum Übertragen der Authentisierungsdaten an die abgeleitete Authentisierungsinstanz der Originaldatenträger den geheimen Schlüssel SKA der abgeleiteten Authentisierungsinstanz an die vertrauenswürdige Instanz und überträgt die vertrauenswürdige Instanz dann die Authentisierungsdaten an die abgeleitete Authentisierungsinstanz.

Gemäß bevorzugter Ausführungsformen wird der geheime Schlüssel SKA der abgeleiteten Authentisierungsinstanz verschlüsselt übertragen und der Originaldatenträger überträgt den zugehörigen Entschlüsselungsschlüssel RND2 direkt an die abgeleitete Authentisierungsinstanz.

Vorzugsweise überträgt zum Übertragen der Authentisierungsdaten an die abgeleitete Authentisierungsinstanz die vertrauenswürdige Instanz die Ableitungsdaten g1, Sig(gl) an den Originaldatenträger und der Originaldatenträger überträgt den geheimen Schlüssel SKA der abgeleiteten Authentisierungsinstanz und die Ableitungsdaten g1, Sig(gl) an die abgeleitete Authentisierungsinstanz.

Gemäß einem zweiten Aspekt der Erfindung wird ein Verfahren zur Authentisierung einer Authentisierungsinstanz gegenüber einem Authentisierungspartner bereitgestellt, vorzugsweise mittels eines Diffie-Hellman-Schlüsselaustauschverfahrens, auf der Basis eines öffentlichen Schlüssels PKO und eines geheimen Schlüssels SKA der Authentisierungsinstanz sowie eines öffentlichen Sitzungsschlüssels PKD und eines geheimen Sitzungsschlüssels SKD des Authentisierungspartners, wobei die Authentisierungsinstanz eine von einem Originaldatenträger abgeleitete Authentisierungsinstanz ist, wobei der geheime Schlüssel SKA der abgeleiteten Authentisierungsinstanz aus einem geheimen datenträgerindividuellen Schlüssel SKO des Originaldatenträgers mit einem Ableitungswert RND1 abgeleitet wird, der öffentliche Schlüssel PKA der abgeleiteten Authentisierungsinstanz dem öffentlichen Schlüssel des Originaldatenträgers entspricht und die Authentisierungsinstanz dem Authentisierungspartner einen aus dem Ableitungswert gebildeten Ableitungsparameter g1 bereitstellt, und der öffentliche Sitzungsschlüssel PKD des Authentisierungspartners aus dem geheimen Sitzungsschlüssel SKD und dem Ableitungsparameter g1 gebildet wird.

Vorzugsweise wird der geheime Schlüssel SKA der abgeleiteten Authentisierungsinstanz mittels Multiplikation des geheimen Schlüssels SKO des Originaldatenträgers mit einer Zufallszahl RND1 als Ableitungswert gebildet und der öffentliche Sitzungsschlüssel PKD des Authentisierungspartners mittels Exponentiation einer abgeleiteten Basis g1 als Ableitungsparameter mit dem geheimen Sitzungsschlüssel SKD des Authentisierungspartners bestimmt.

Gemäß bevorzugter Ausführungsformen ist das Verfahren weiter gekennzeichnet durch einen Schritt des Vereinbarens eines Kommunikationsschlüssels KKA, KKD zwischen der abgeleiteten Authentisierungsinstanz und dem Authentisierungspartner.

Gemäß einem dritten Aspekt der Erfindung wird ein portabler Datenträger bereitgestellt, umfassend einen Speicher, einen Prozessor und eine Datenkommunikationsschnittstelle zur Datenkommunikation mit einer externen Instanz, dadurch gekennzeichnet, dass der Datenträger eingerichtet ist, in der Rolle des Originaldatenträgers zusammen mit einer dazu eingerichteten, vertrauenswürdigen Instanz ein Verfahren gemäß dem ersten Aspekt der Erfindung zur Erstellung einer abgeleiteten Authentisierungsinstanz durchzuführen.

Gemäß einem vierten Aspekt der Erfindung wird ein portabler Datenträger bereitgestellt, umfassend einen Speicher, einen Prozessor und eine Datenkommunikationsschnittstelle zur Datenkommunikation mit einer externen Instanz, dadurch gekennzeichnet, dass eine von einem Originaldatenträger abgeleitete Authentisierungsinstanz im Rahmen eines Verfahrens gemäß dem ersten Aspekt der Erfindung auf dem portablen Datenträger erstellt worden ist.

Gemäß einem fünften Aspekt der Erfindung wird ein Endgerät bereitgestellt, umfassend einen Speicher, einen Prozessor und eine Datenkommunikationsschnittstelle zur Datenkommunikation mit einer externen Instanz, dadurch gekennzeichnet, dass eine von einem Originaldatenträger abgeleitete Authentisierungsinstanz im Rahmen eines Verfahrens gemäß dem ersten Aspekt der Erfindung in einem virtuellen Datenträger auf dem Endgerät erstellt worden ist.

Weitere Merkmale, Vorteile und Aufgaben der Erfindung gehen aus der folgenden detaillierten Beschreibung mehrerer Ausführungsbeispiele und Ausführungsalternativen hervor. Es wird auf die Zeichnungen verwiesen, in denen zeigen:

Figur 1  einen Überblick über wesentliche Schritte einer bevorzugten Ausführungsform eines erfindungsgemäßen Verfahrens zum Herstellen und Betreiben eines von einem Originaldatenträger abgeleiteten Datenträgers;

Figur 2  wesentliche Schritte einer Authentisierung des Originaldatenträgers gegenüber einer vertrauenswürdigen Instanz;

Figur 3  im Rahmen der Ableitung und Verschlüsselung eines geheimen Schlüssels für den abgeleiteten Datenträger durchzuführende Schritte;

Figur 4  Schritte zur Übertragung des abgeleiteten Schlüssels;

Figur 5  Schritte zur Vorbereitung des abgeleiteten Datenträgers;

Figur 6  wesentliche Schritte einer Authentisierung des abgeleiteten Datenträgers gegenüber der vertrauenswürdigen Instanz und

Figur 7  wesentliche Schritte einer Authentisierung des abgeleiteten Datenträgers gegenüber einem Dienstanbieter.

Im Folgenden wird eine bevorzugte Ausführungsform eines Verfahrens zum Herstellen eines von einem Originaldatenträger abgeleiteten Datenträgers beschrieben.

Als Originaldatenträger kann ein beliebiges Sicherheitsdokument verwendet werden, welches hinsichtlich der Hardware über eine gewisse Minimalausstattung umfassend einen Speicher, einen Prozessor und eine Datenkommunikationsschnittstelle zur Datenkommunikation mit einer externen Instanz verfügt. Typische Beispiele für einen Originaldatenträger im Sinne der vorliegenden Erfindung sind beispielsweise ein Personalausweis mit eID-Funktionalität, ein Reisepass, eine Signaturkarte und dergleichen.

Der abgeleitete Datenträger, welcher über dieselben minimalen Hardwaregrundlagen wie der Originaldatenträger verfügen sollte, kann beispielsweise auf der Grundlage einer gewöhnlichen Chipkarte oder eines ähnlich ausgebildeten portablen Datenträgers oder Tokens hergestellt werden.

Alternativ kann allerdings auch ein mobiles Endgerät, z.B. ein Mobilfunkendgerät, ein Smartphone, ein Tablet oder dergleichen, eine entsprechend eingerichtete Umgebung bereitstellen, vorzugsweise in Form eines gesicherten, vom gewöhnlichen Betriebssystem des Geräts abgeschirmten Bereichs, beispielsweise in Form eines so genannten "Trusted Execution Environment" (TEE), um die im Rahmen der Herstellung des - dann virtuellen - abgeleiteten Datenträgers von dem Originaldatenträger an den abgeleiteten Datenträger zu übertragenden Objekte, beispielsweise in Form von Daten, Schlüssel, Zertifikaten und Applikationen, aufzunehmen. Ein geeignetes TEE wird beispielsweise von der Firma Trustonic vertrieben.

Das Herstellungsverfahren kann als Delegationsverfahren verstanden werden. Allgemein wird dabei ein Delegationsobjekt unter Aufsicht eines Delegationsmanagers von dem Originaldatenträger in der Rolle des Delegators an den abgeleiteten Datenträger in der Rolle des Delegenten übertragen oder delegiert.

Ein solches Delegationsobjekt umfasst solche Elemente, welche der Originaldatenträger benötigt, um Transaktionen mit einer dritten Instanz durchzuführen. Eine solche Instanz kann beispielsweise ein beliebiger Dienstanbieter im Internet sein, oder eine Bank, eine Behörde, ein Unternehmen etc. Eine genannte Transaktion kann entsprechend beispielsweise ein Kaufgeschäft über das Internet, das Eröffnen eines Depots, das Einreichen einer Steuererklärung, der Zutritt zu einem Gebäude und ähnliches mehr sein. In der Regel erfordert jede dieser Transaktionen eine Authentisierung des Originaldatenträgers gegenüber der anderen Partei.

In der Regel ist die Funktionalität des abgeleiteten Datenträgers nach dessen Fertigstellung gegenüber der Funktionalität des Originaldatenträgers eingeschränkt. Eine im Wesentlichen identische Kopie ist eher nicht beabsichtigt, prinzipiell aber möglich. Ein von dem Originaldatenträger abgeleiteter Datenträger soll lediglich dafür hergestellt werden, den Originaldatenträger für eine gewisse Zeitspanne, d.h. bis zu einem vorgegebenen Ablaufdatum, für eine gewisse Aufgabe, beispielsweise zur Authentisierung mit Altersnachweis (d.h. im Sinne eines Personalausweises) zu ersetzen.

Es kann vorgesehen sein, dass die von dem Originaldatenträger an den abgeleiteten Datenträger temporär delegierte Funktionalität in dieser Zeit, d.h. zwischen Herstellung des abgeleiten Datenträgers und bis zu dessen Ablaufdatum, also solange der abgeleitete Datenträger anstelle des Originaldatenträgers mit Bezug auf die delegierte Funktionalität verwendet werden kann, auf dem Originaldatenträger selbst deaktiviert wird. Im Delegationsprozess selbst werden dabei entsprechende Zugriffsrechte im Originaldatenträger entsprechend temporär verändert.

Vorzugsweise wird eine vertrauenswürdige Instanz, beispielsweise ein so genannter "Trusted Service Manager", als Delegationsmanager dienen. Ein solcher Delegationsmanager kann als unabhängige Instanz betrieben werden oder aber einem speziellen Dienstanbieter angegliedert sein. In der Regel bezieht die vertrauenswürdige Instanz ihre Berechtigung zur nachfolgend beschriebenen Überwachung eines Delegationsprozesses zur Herstellung eines abgeleiteten Datenträgers aus einem letztlich von einer zuständigen staatlichen Stelle verliehenen und verifizierbaren Zertifikat.

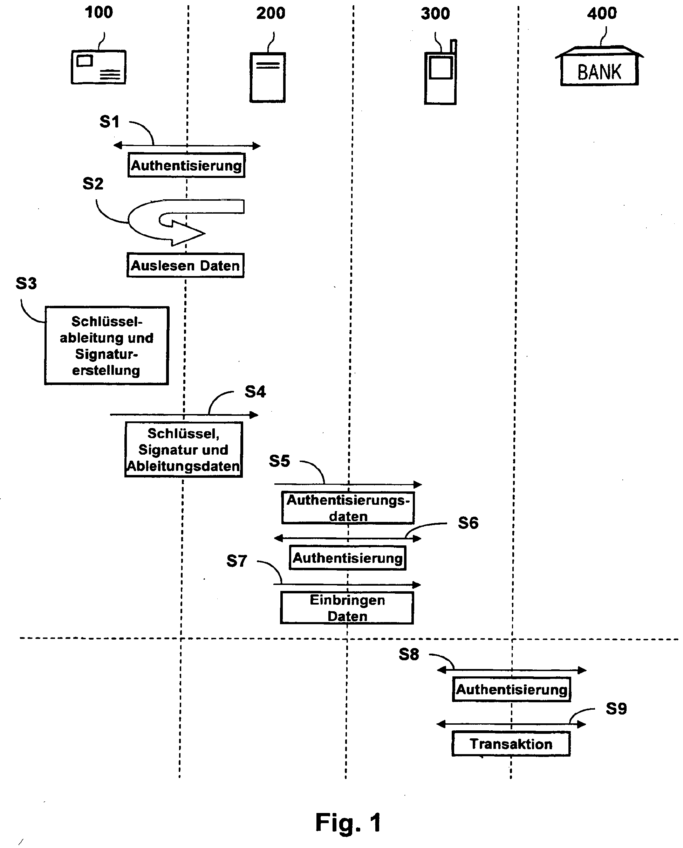

In Figur 1 sind die wesentlichen Schritte eines Verfahrens zur Herstellung eines abgeleiteten Datenträgers 300 (S0 bis S7) sowie die ersten Schritte (S8 und S9) eines Verfahrens zur Verwendung dieses Datenträgers 300 gegenüber einem Dienstanbieter 400 dargestellt.

Ein Inhaber eines Originaldatenträgers 100 möchte einen von dem Originaldatenträger 100 abgeleiteten Datenträger 300 herstellen. Hierzu wird vorzugsweise eine Datenkommunikation zwischen dem Originaldatenträger 100 und der als Delegationsmanager dienenden vertrauenswürdigen Instanz 200 verwendet

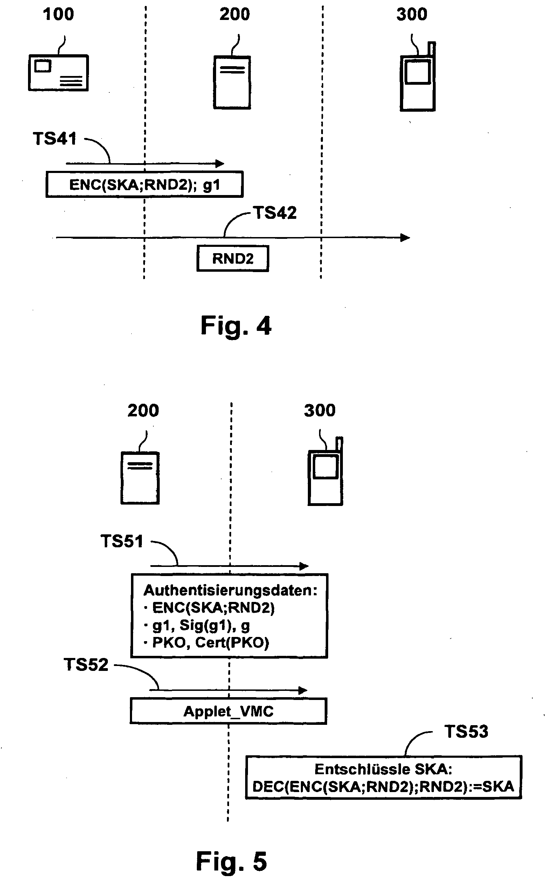

Dazu kann es notwendig sein, den Originaldatenträger 100 über ein geeignetes Lesegerät (nicht gezeigt) mit einem Endgerät (nicht gezeigt), beispielsweise einem Notebook oder dergleichen zu verbinden, welches seinerseits über ein geeignetes Netzwerk (nicht gezeigt), beispielsweise dem Internet, mit der vertrauenswürdigen Instanz 200, z.B. einem Server dieser Instanz, verbunden ist. In analoger Weise kann eine Datenkommunikationsverbindung zwischen dem abgeleiteten Datenträger 300 und der vertrauenswürdigen Instanz 200 oder einem Dienstanbieter 400 hergestellt werden. Eine gegebenenfalls notwendige Datenkommunikation zwischen dem Originaldatenträger 100 und dem abgeleiten Datenträger 300 (vgl. Fig. 4, TS42) kann auch direkt, beispielsweise kontaktlos über NFC ("near field communication") oder über ein lokales Netzwerk (nicht gezeigt) erfolgen.

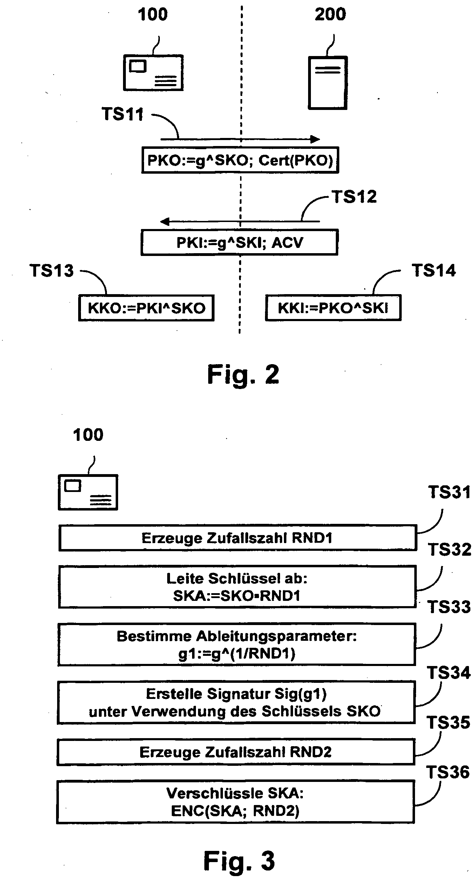

Um den Originaldatenträger 100 für das Verfahren betriebsbereit zu machen, kann eine Nutzerauthentisierung gegenüber dem Originaldatenträger 100 erforderlich sein. Dies kann beispielsweise durch Eingabe einer PIN erfolgen. In Schritt S1 authentisiert sich der Originaldatenträger 100 gegenüber der vertrauenswürdigen Instanz 200. Wesentliche Schritte der Authentisierung des Originaldatenträgers 100 gegenüber der vertrauenswürdigen Instanz 200 sind in Fig. 2 dargestellt.

Sowohl der Originaldatenträger 100 als auch die vertrauenswürdige Instanz 200 verfügen jeweils über einen öffentlichen und einen geheimen Schlüssel. Der öffentliche Schlüssel PKO des Originaldatenträgers 100 ist mit einem Schlüsselzertifikat Cert(PKO) versehen, welches von der vertrauenswürdigen Instanz 200 geprüft werden kann. Im Rahmen der Authentisierung wird ein geheimer Kommunikationsschlüssel KK vereinbart. Dieser dient dazu, die nachfolgende Datenkommunikation zu verschlüsseln und dadurch gegen Abhören oder Verändern zu sichern.

In einem ersten Teilschritt TS11 überträgt der Originaldatenträger 100 seinen öffentlichen Schlüssel PKO sowie das zugehörige Zertifikat Cert(PKO) an die vertrauenswürdige Instanz 200. Diese überträgt im Gegenzug in Teilschritt TS12 ihren öffentlichen Schlüssel PKI sowie ein nachfolgend genauer beschriebenes Berechtigungszertifikat ACV an den Originaldatenträger 100. Die jeweiligen öffentlichen Schlüssel ergeben sich, wie in Fig. 2 angegeben, durch Exponentiation einer vorgegebenen Basis, einer geeigneten Primitivwurzel g, mit dem jeweiligen geheimen Schlüssel. Mathematische Details werden hier und im Folgenden ausgelassen, wie beispielsweise eine modulare Reduktion des Exponentiationsergebnisses modulo einer geeignet gewählten Primzahl p, welche, wie die Basis g, zu einer Menge beiden Parteien vorab bekannter Verfahrensparameter gehört. D.h. für den Originaldatenträger 100 gilt $PKO := g^{SKO}$, für die vertrauenswürdige Instanz gilt $PKI := g^{SKI}$. In den Teilschritten TS13 und TS14 berechnen die beiden Parteien jeweils auf ihrer Seite den Kommunikationsschlüssel dadurch, dass der von der anderen Partei jeweils empfangene öffentliche Schlüssel mit dem eigenen geheimen Schlüssel exponentiert wird. Beide Parteien berechnen auf diese Weise denselben Kommunikationsschlüssel KK = KKO = KKI, denn es gilt

$$KKO := PKI^{SKO} = (g^{SKI})^{SKO} = g^{(SKI \cdot SKO)}$$
$$= g^{(SKO \cdot SKI)} \quad = (g^{SKO})^{(SKI)}$$
$$= PKO^{SKI}$$
$$=: KKI$$

Eine Authentisierung der vertrauenswürdigen Instanz 200 gegenüber dem Originaldatenträger 100 kann zusätzlich und unabhängig von den in Fig. 2 gezeigten Schritten, beispielsweise unter Verwendung weiterer geeigneter Schlüssel und mittels eines Challenge-Response-Verfahrens, erfolgen.

Nach erfolgreicher Authentisierung kann nun die vertrauenswürdige Instanz 200 in Schritt S2 Daten aus dem Originaldatenträger 100 - über den mittels des Kommunikationsschlüssels KK gesicherten Kanal - auslesen. Dazu legt die vertrauenswürdige Instanz 200 dem Originaldatenträger 100 das Berechtigungszertifikat ACV vor. Dieses Zertifikat kann von einer staatlichen Stelle signiert sein und weist die Berechtigung der vertrauenswürdigen Instanz 200 nach, Daten aus dem Originaldatenträger 100 auslesen zu dürfen. Nachdem der Originaldatenträger 100 das Zertifikat ACV geprüft hat, kann die vertrauenswürdige Instanz 200 die Daten auslesen.

In Schritt S3 leitet der Originaldatenträger 100 einen geheimen Schlüssel SKA für den abgeleiteten Datenträger 300 ab. Dazu erzeugt der Originaldatenträger 100 in einem ersten Teilschritt TS31 eine erste Zufallszahl RND1. Der geheime Schlüssel SKA für den abgeleiteten Datenträger 300 ergibt sich in Teilschritt TS32 als Produkt des geheimen Schlüssels SKO des Originaldatenträgers 100 mit der Zufallszahl RND1, d.h. es gilt SKA:= SKO ▪ RND1.

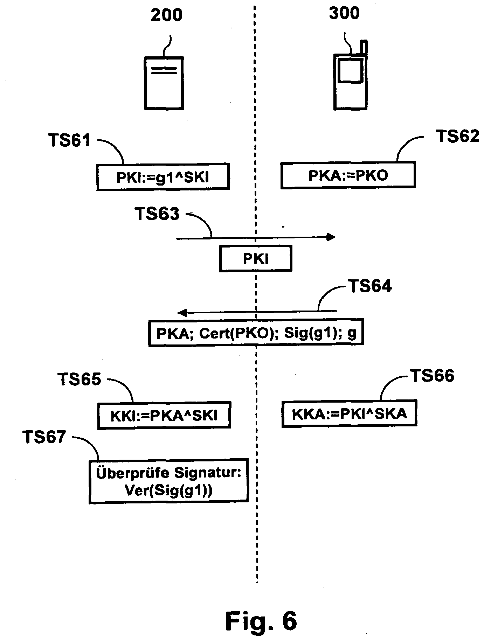

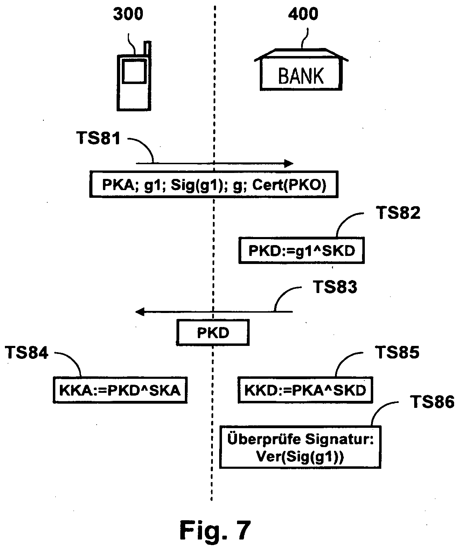

In einem weiteren Teilschritt TS33 erzeugt der Originaldatenträger 100 einen Ableitungsparameter g1, welcher die Ableitung des geheimen Schlüssels SKA für das restliche Verfahren und die anderen beteiligten Kommunikationspartner (vgl. Fig. 6, TS71; Fig. 7, TS92) nachvollziehbar macht, ohne dass der geheime Schlüssel SKA dadurch öffentlich wird.

Der Ableitungsparameter berechnet sich in dem vorliegend beschriebenen Beispiel aus der Basis g, indem diese mit dem Reziproken der Zufallszahl RND1 exponentiert wird. Auch hier sind die dem Fachmann bekannten mathematischen Details ausgelassen, wie beispielsweise ein Reziprokes hier zu verstehen ist und gebildet wird und welche modularen Reduktionen mit welchen Primzahlen zusätzlich erforderlich sind. Eine detaillierte Beschreibung hier beschriebener (Anteile von) Authentisierungsverfahren auf der Basis (modifizierter) Diffie-Hellman-Verfahren findet sich beispielsweise in dem Entwurf zur Europäischen Norm EN 14890-1 (STD Version 2.2) im Anhang C.6.1.

In einem weiteren Teilschritt TS34 wird vom Originaldatenträger 100 eine Signatur Sig(gl) des Ableitungsparameters g1 unter Verwendung des geheimen Schlüssels SKO des Originaldatenträgers 100 erzeugt. Gemäß einer bevorzugten Ausführungsform der Erfindung kommt hierbei die Schnorr-Signatur zum Einsatz. Wie dies dem Fachmann bekannt ist, wird bei der Erstellung der Schnorr-Signatur eines Datenelements M vom Signierenden, der ein PKI-Schlüsselpaar in Form eines öffentlichen Schlüssels PK und eines geheimen Schlüssels SK (mit PK = $g^{SK}$) besitzt, der Wert s = k - SK ▪ e berechnet, wobei k eine Zufallszahl aus der Restklasse modulo p ist und e = H(M‖r) gilt Dabei steht H für eine geeignete Hashfunktion und M‖r für die Konkatenation des zu signierenden Datenelements M mit dem Wert r = $g^k$. Weitere Details zur Schnorr-Signatur sowie zu weiteren gemäß der Erfindung geeigneten Signaturverfahren, wie beispielsweise DSA, ElGamal und dergleichen, lassen sich beispielsweise dem Abschnitt 11 und insbesondere dem Abschnitt 11.5 des Buchs "Handbook of Applied Cryptography" von A. Menezes, P. van Oorschot und S. Vanstone, 1997 entnehmen, auf das hiermit vollumfänglich Bezug genommen wird.

Wählt man als Signaturverfahren die gemäß der vorliegenden Erfindung bevorzugte Schnorr-Signatur so ergibt sich für die Signatur Sig(gl) der folgende Wert Sig(gl) = (1/RND1) - SKO ▪ H(g1). Dabei wurde für die Schnorr-Signatur als Zufallszahl k das Inverse der Zufallszahl RND1, d.h. 1/RND1, gewählt, woraus sich für den Wert r = $g^k$ = $g^{(1/RND1)}$ = g1 ergibt, sofern, wie hier bevorzugt, das im allgemeinen Fall der Schnorr-Signatur zu signierende Datenelement M weggelassen wird. Wie man leicht erkennt, fließt in die Berechnung der Schnorr-Signatur der geheime Schlüssel SKO des Originaldatenträgers 100 ein.

Nach den Teilschritten TS32 bis TS34 kann die Zufallszahl RND1 vom Originaldatenträger 100 gelöscht werden.

Die weiteren Teilschritte TS35 und TS36 zeigen optionale Verfahrensschritte zum Verschlüsseln des abgeleiteten Schlüssels SKA, bevor dieser (vgl. Fig. 1, Schritt S4) an die vertrauenswürdige Instanz 200 übertragen wird. Vorzugsweise erzeugt der Originaldatenträger 100 dazu eine zweite Zufallszahl RND2 als Verschlüsselungsparameter (TS35) und verschlüsselt den Schlüssel SKA mit Hilfe des Verschlüsselungsparameters RND2 in TS36. Dies kann beispielsweise dadurch erfolgen, dass der Schlüssel SKA und der Verschlüsselungsparameter RND2 XOR-verknüpft werden.

Eine solche Verschlüsselung des Schlüssels SKA kann aber auch unterbleiben. Dies gilt insbesondere, da der Datenkommunikationskanal zwischen dem Originaldatenträger 100 und der vertrauenswürdigen Instanz 200 mittels des vorher ausgehandelten Kommunikationsschlüssels KK gesichert ist und die vertrauenswürdige Instanz 200 durch ihre Stellung und Rolle im Gesamtsystem als Quelle einer Korruption des abgeleiteten Datenträgers 300 so gut wie nicht in Frage kommt

Wie in Fig. 4 dargestellt, wird der mittels RND2 verschlüsselte abgeleitete Schlüssel SKA zusammen mit dem Ableitungsparameter g1, welcher gegebenenfalls auch verschlüsselt werden kann, in Teilschritt TS41 von dem Originaldatenträger 100 an die vertrauenswürdige Instanz 200 übertragen. In einem weiteren Teilschritt TS42 überträgt der Originaldatenträger 100 den Verschlüsselungsparameter RND2 an den abgeleiteten Datenträger 300. Dies geschieht über einen separaten Datenkommunikationskanal, der vorzugsweise ebenfalls in geeigneter Weise gesichert ist.

In Schritt S5 von Figur 1 bzw. Teilschritt TS51 von Figur 5 werden Authentisierungsdaten von der vertrauenswürdigen Instanz 200 an den abgeleiteten Datenträger 300 übertragen. In der beschriebenen bevorzugten Ausführungsform umfassen die Authentisierungsdaten den (verschlüsselten) geheimen Schlüssel SKA des abgeleiteten Datenträgers 300, den dazugehörigen Ableitungsparameter g1 (gegebenenfalls ebenfalls verschlüsselt) und dessen Signatur Sig(gl), die Basis g, den öffentlichen Schlüssel PKO des Originaldatenträgers sowie das diesem zugeordnete Schlüsselzertifikat Cert(PKO). Die Basis g, aus der sich der Ableitungsparameter g1 ergibt, kann Teil des Zertifikats Cert(PKO) sein, beispielsweise wenn es sich um Zertifikat gemäß dem Standard X.509 handelt.

Im einem prinzipiell von der Übertragung der Authentisierungsdaten 310 unabhängigen Teilschritt TS52, welcher auch zu einem geeigneten anderen, insbesondere früheren Zeitpunkt des Verfahrens erfolgen kann, überträgt die vertrauenswürdige Instanz 200 diejenigen Grundfunktionalitäten und - strukturen an den abgeleiteten Datenträger 300, welche dieser benötigt, um anstelle des Originaldatenträgers 100 eingesetzt werden zu können, und die unabhängig von dem Originaldatenträger 100 sind. Dies betrifft beispielsweise ein Dateisystem, kryptographische Funktionalitäten, Funktionalitäten zur Datenkommunikation, Anteile eines minimalen Betriebssystems, falls noch nicht vorhanden, und dergleichen. In Fig. 5 ist dies zusammenfassend mit dem Begriff "Applet_VMC" bezeichnet worden, wobei VMC für "Virtual Mobile Card" steht.

In Teilschritt TS53 entschlüsselt der abgeleitete Datenträger 300 den mit den Authentisierungsdaten verschlüsselt empfangenen geheimen Schlüssel SKA mittels des in Teilschritt TS42 (vgl. Fig. 4) empfangenen Verschlüsselungsparameters RND2.

Die Authentisierungsdaten können seitens des abgeleiteten Datenträgers 300 schließlich in die dafür vorgesehenen Speicherbereiche in dem Datenträger 300 gespeichert werden.

Wesentliche Schritte einer im Verfahrensablauf nun folgenden Authentisierung des abgeleiteten Datenträgers 300 gegenüber der vertrauenswürdigen Instanz 200 sind in Fig. 6 angegeben. Ein Vergleich mit den in Fig. 2 gezeigten Schritten, welche eine Authentisierung des Originaldatenträgers 100 gegenüber der vertrauenswürdigen Instanz 200 beschreiben, zeigt eine geringfügige, aber wesentliche Abweichung im Rahmen des zur Vereinbarung des Kommunikationsschlüssels verwendeten Protokolls. In einem gewöhnlichen Diffie-Hellman-Verfahren, wie es in Fig. 2 illustriert ist, wird der öffentliche Schlüssel jeder Partei jeweils durch Exponentiation einer vorgegebenen Basis (bzw. Primitivwurzel) g mit dem jeweils zugehörigen geheimen Schlüssel gebildet (vgl. Fig. 2, TS11, TS12).

In der abgeleiteten, mit Bezug auf Fig. 6 gezeigten Variante des Diffie-Hellman-Verfahrens ist dies nicht mehr der Fall. Nun werden die jeweiligen öffentlichen Schlüssel jeweils durch Exponentiation des Ableitungsparameters g1 (anstelle von g) mit dem jeweils zugehörigen geheimen Schlüssel gebildet (vgl. Fig. 6, TS61, TS62). Die in TS62 angegebene Gleichheit des öffentlichen Schlüssels des abgeleiteten Datenträgers PKA mit den öffentlichen Schlüssel PKO des Originaldatenträgers 100 ergibt sich wie folgt

$$PKA := g1\text{\textasciicircum}(SKA)$$
$$= g\text{\textasciicircum}(1/RND)\text{\textasciicircum}(SKA)$$
$$= g\text{\textasciicircum}((1/RND)\cdot RND\cdot SKO)$$
$$= g\text{\textasciicircum}(SKO) = PKO.$$

Der restliche Ablauf des Verfahrens, welcher in den Teilschritten TS63 bis TS66 angegeben ist, gleicht dem Verfahren aus Fig. 2. Die wie vorstehend beschriebenen erzeugten öffentlichen Schlüssel werden der jeweils anderen Partei zur Verfügung gestellt (vgl. TS63, TS64). Der öffentliche Schlüssel PKA des abgeleiteten Datenträgers 300 kann seitens der vertrauenswürdigen Instanz 200 anhand des Schlüsselzertifikats Cert(PKO) verifiziert werden. Zur Bestimmung des Kommunikationsschlüssels wird jeweils der empfangene öffentliche Schlüssel der anderen Partei mit dem eigenen Schlüssel exponentiert (vgl. TS65, TS66). Eine Übereinstimmung der derart bestimmten

Kommunikationsschlüssel ergibt sich wie folgt. Der abgeleitete Datenträger 300 berechnet

$$KKA := PKI^{\wedge}SKA$$
$$= (g1^{\wedge}(SKI))^{\wedge}SKA$$
$$= (g^{\wedge}(1/RND)^{\wedge}(SKI))^{\wedge}SKA$$
$$= g^{\wedge}((1/RND) \cdot SKI \cdot SKO \cdot RND)$$
$$= g^{\wedge}(SKI \cdot SKO).$$

Die vertrauenswürdige Instanz 200 ihrerseits berechnet:

$$KKI := PKA^{\wedge}SKI$$
$$= PKO^{\wedge}SKI$$
$$= (g^{\wedge}SKO)^{\wedge}(SKI)$$
$$= g^{\wedge}(SKI \cdot SKO) = KKA.$$

In Teilschritt TS67 schließlich kann die vertrauenswürdige Instanz 200 noch die im Rahmen der Übertragung der Authentisierungsdaten in Schritt S5 an den abgeleiteten Datenträger 300 übertragene Signatur Sig(gl) prüfen. Im bevorzugten Fall einer Schnorr-Signatur verifiziert die vertrauenswürdige Instanz 200 die Signatur, indem überprüft wird, dass der vorstehend im Rahmen der Schnorr-Signatur beschriebene Wert r = g^k = g^(1/RND1) = g1 gleich dem folgenden Wert rv ist

$$rv = g^{\wedge}Sig(g1) \cdot PKO^{\wedge}H(g1) \qquad (Def.\ von\ Sig(g1))$$
$$= g^{\wedge}((1/RND1) - SKO \cdot H(g1)) \cdot PKO^{\wedge}H(g1) \qquad (Def.\ von\ PK0)$$
$$= g^{\wedge}((1/RND1) - SKO \cdot H(g1)) \cdot (g^{\wedge}SKO)^{\wedge}H(g1) \qquad (Umformung)$$
$$= g^{\wedge}(1/RND1)$$
$$= g1$$

Aus der Tatsache, dass in die Überprüfung der Signatur Sig(gl) auf Seiten der vertrauenswürdigen Instanz 200 der öffentliche Schlüssel PKO des Originaldatenträgers 100 sowie die Basis g einfließt, folgt für die vertrauenswürdige Instanz 200, dass die Signatur Sig(gl) mittels eines dazu passenden geheimen Schlüssels erzeugt worden ist, d.h. mittels des geheimen Schlüssels SKO des Originaldatenträgers 100.

Damit ist die Authentisierung des abgeleiteten Datenträgers 300 gegenüber der vertrauenswürdigen Instanz 200 abgeschlossen.

Ist dieser Vorgang erfolgreich verlaufen, so überträgt nun die vertrauenswürdige Instanz in Schritt S7 die in Schritt S2 aus dem Originaldatenträger 100 ausgelesenen Daten an den abgeleiteten Datenträger 300. Damit ist die Herstellung des abgeleiteten Datenträgers 300 abgeschlossen und dieser kann im normalen Betrieb, anstelle des Originaldatenträgers 100, eingesetzt werden. Ein solcher Einsatz wird abschließend mit Bezug auf Fig. 7 illustriert.

Ein Verfahren zur Verwendung des abgeleiteten Datenträgers 300 gegenüber einem Dienstanbieter 400 umfasst das Authentisieren des abgeleiteten Datenträgers 300 gegenüber dem Dienstanbieter 400. Dazu verwendet der abgeleitete Datenträger 300 die während der Herstellung an den abgeleiteten Datenträger 300 übertragenen Authentisierungsdaten (vgl. Fig. 5, TS51).

Wie ein Vergleich der Teilschritte TS81 bis TS85 aus Fig. 7 mit den Teilschritten TS61 bis TS66 in Fig. 6 zeigt, verläuft die Authentisierung des abgeleiteten Datenträgers 300 gegenüber dem Dienstanbieter 400 vorzugsweise analog, d.h. nach demselben Protokoll und unter Verwendung derselben Authentisierungsdaten, wie die Authentisierung des abgeleiteten Datenträgers 300 gegenüber der vertrauenswürdigen Instanz 200. Es wird ein Kommunikationsschlüssel (KKA, KKD, vgl. TS84; TS85) zwischen dem abgeleiteten Datenträger 300 und dem Dienstanbieter 400 mittels der bereits mit Bezug auf Fig. 6 detailliert beschriebenen Variante des Diffie-Hellman-Schlüsselaustauschverfahrens vereinbart. Dies geschieht auf der Basis des öffentlichen Schlüssels PKA und des geheimen Schlüssels SKA des abgeleiteten Datenträgers 300 sowie eines öffentlichen Sitzungsschlüssels PKD und eines geheimen Sitzungsschlüssels SKD des Dienstanbieters 400. Der öffentliche Schlüssel PKA des abgeleiteten Datenträgers 300 ist bereits während der Herstellung des abgeleiteten Datenträgers 300 mittels Exponentiation des Ableitungsparameters g1 mit dem geheimen Schlüssel SKA des abgeleiteten Datenträgers 300 bestimmt worden. Der geheime Schlüssel SKA des abgeleiteten Datenträgers 300 ergab sich, ebenfalls bereits während der Herstellung des Datenträgers 300, mittels Multiplikation des geheimen Schlüssels SKO des Originaldatenträgers 100 mit der Zufallszahl RND1. Daher stimmt auch, wie vorstehend ausgeführt, der öffentliche Schlüssel PKA des abgeleiteten Datenträgers 300 mit dem öffentlichen Schlüssel PKO des Originaldatenträgers 100 überein. So ist es möglich, dass der öffentliche Schlüssel PKA des abgeleiteten Datenträgers 300 mit dem Originalschlüsselzertifikat Cert(PKO) des öffentlichen Schlüssels PKO des Originalsdatenträgers 100 versehen ist (vgl. TS81). Vorzugsweise prüft der Dienstanbieter 400 dieses Zertifikat Cert(PKO) im Rahmen der Authentisierung.

Der öffentliche Sitzungsschlüssel PKD des Dienstanbieters 400 wird mittels Exponentiation des Ableitungsparameters g1 mit dem geheimen Sitzungsschlüssel SKD des Dienstanbieters 400 bestimmt (vgl. TS82).

In einem weiteren Schritt (vgl. TS86) verifiziert der Dienstanbieter 400 die Signatur Sig(gl) des Ableitungsparameters g1. Im bevorzugten Fall einer Schnorr-Signatur verifiziert der Dienstanbieter 400 die Signatur Sig(gl), indem überprüft wird, dass der vorstehend im Rahmen der Schnorr-Signatur beschriebene Wert $r = g^k = g^{(1/RND1)} = g1$ gleich dem folgenden Wert rv ist

$$
\begin{aligned}
rv \quad &= g^{\wedge}Sig(g1) \cdot PKO^{\wedge}H(g1) & &(\text{Def. von } Sig(g1)) \\
&= g^{\wedge}((1/RND1) - SKO \cdot H(g1)) \cdot PKO^{\wedge}H(g1) & &(\text{Def. von } PK0) \\
&= g^{\wedge}((1/RND1) - SKO \cdot H(g1)) \cdot (g^{\wedge}SKO)^{\wedge}H(g1) & &(\text{Umformung}) \\
&= g^{\wedge}(1/RND1) \\
&= g1
\end{aligned}
$$

Aus der Tatsache, dass in die Überprüfung der Signatur Sig(gl) auf Seiten des Dienstanbieters 400 der öffentliche Schlüssel PKO des Originaldatenträgers 100 sowie die Basis g einfließt, folgt für den Dienstanbieter 400, dass die Signatur Sig(gl) mittels eines dazu passenden geheimen Schlüssels erzeugt worden ist, d.h. mittels des geheimen Schlüssels SKO des Originaldatenträgers 100.

Abhängig von der Art der Transaktion, welche zwischen dem abgeleiteten Datenträger 300 und dem Dienstanbieter 400 durchgeführt werden soll, können auf eine erfolgreiche Authentisierung weitere Schritte folgen, beispielsweise ein Auslesen von Daten aus dem abgeleiteten Datenträger 300 durch den Dienstanbieter 400, wie dies in Figur 1 durch den Schritt S9 angedeutet ist Dazu müsste der Dienstanbieter 400 dann in der Regel ein entsprechendes Berechtigungszertifikat vorlegen, welches durch den abgeleiteten Datenträger 300 geprüft werden könnte (vgl. die analoge Situation zwischen vertrauenswürdiger Instanz 200 und Originaldatenträger 100 während der Herstellung des abgeleiteten Datenträgers 300; Fig. 2, TS12; Übertragung des Berechtigungszertifikats ACV durch die vertrauenswürdige Instanz 200 an den Originaldatenträger 100).

Bei der vorstehend beschriebenen bevorzugten Ausführungsform ist beschrieben worden, dass bei der Erstellung der Signatur das zu signierende Datenelement M weggelassen wird und lediglich durch eine entsprechende Wahl des Werts $r = g^k = g^{(1/RND1)} = g1$ der Ableitungsparameter g1 signiert wird. Wie dies nachstehend am wiederum bevorzugten Beispiel der Schnorr-Signatur beschrieben wird, ist der vom Originaldatenträger 100 abgeleitete Datenträger 300 aufgrund der ihm vorliegenden Authentisierungsdaten dazu in der Lage, ein Datenelement M zu signieren und die Signatur Sig(M) durch einen Dienstanbieter 400 überprüfen zu lassen. Zur Erstellung der Schnorr-Signatur eines Datenelements M berechnet der abgeleitete Datenträger 300 den folgenden Wert $Sig(M) = k - SKA \cdot H(M\|g1^k)$, wobei k eine für jede Signatur neu zu erzeugende Zufallszahl ist.

Zur Verifizierung der Signatur des Datenelements M überprüft der Dienstanbieter 400, ob der Wert $r = g1^k$ gleich dem folgenden Wert rv mit $e = H(M\|g1^k)$ ist:

$$rv = g1^{\wedge}Sig(M) \cdot PKO^{\wedge}e$$
$$= g1^{\wedge}(k - SKA \cdot e) \cdot PKO^{\wedge}e$$
$$= (g^{\wedge}(1/RND1))^{\wedge}(k - SKA \cdot e) \cdot (g1^{\wedge}SKA)^{\wedge}e$$
$$= g^{\wedge}((1/RND1) \cdot (k - SKA \cdot e) \cdot (g^{\wedge}(1/RND1))^{\wedge}(SKA \cdot e)$$
$$= g^{\wedge}((1/RND1) \cdot k) \cdot g^{\wedge}(SKA \cdot e - SKA \cdot e)$$
$$= g^{\wedge}((1/RND1) \cdot k)$$
$$= g1^{\wedge}k$$

Falls sich bei der Prüfung ergibt, dass der vom Dienstanbieter 400 berechnete Wert rv = g1^Sig(M) ▪ PKO^H(M‖g1^k) gleich dem vom Dienstanbieter 400 berechneten Wert r = g1^k ist, dann ist die vom abgeleiteten Datenträger erstellte Signatur Sig(M) des Datenelements M verifiziert. Mit anderen Worten: mittels der vorliegenden Erfindung ist es möglich, dass auch mittels des abgeleiteten Datenträgers rechtsverbindliche Signaturen geleistet werden.

Der Fachmann wird erkennen, dass ein großer Vorteil der Erfindung darin besteht, dass aufgrund der Verifizierung der Integrität des Ableitungsparameters g1 mittels dessen Signatur Sig(gl) das vorstehend beschriebene Verfahren zur Erstellung eines abgeleiteten Datenträgers 300 auf der Grundlage des Originaldatenträgers 100 zum großen Teil auch ohne die Mitwirkung der vorstehend beschriebene vertrauenswürdigen Instanz 200 durchgeführt werden kann. Der Fachmann wird folglich verstehend, dass es sich bei dem vorstehend beschriebenen Beispiel um eine bevorzugte Ausführungsform der Erfindung handelt.

**Patentansprüche**

1. Verfahren zur Erstellung einer von einem Originaldatenträger abgeleiteten Authentisierungsinstanz (300), wobei der Originaldatenträger ein für den Originaldatenträger individuelles Schlüsselpaar, welches einen öffentlichen Schlüssel (PKO) und einen geheimen Schlüssel (SKO) des Originaldatenträgers (100) umfasst, sowie ein Zertifikat (Cert(PKO)) über den öffentlichen Schlüssel (PKO) des Originaldatenträgers aufweist, umfassend die Schritte:

   Ableiten (S3) eines geheimen Schlüssels (SKA) für die abgeleitete Authentisierungsinstanz (300) aus dem geheimen Schlüssel (SKO) des Originaldatenträgers durch den Originaldatenträger unter Verwendung einer Zufallszahl, vorzugsweise durch Multiplikation mit der Zufallszahl;
   Bilden (TS33, S5) von Ableitungsdaten (g1, Sig(g1)) für die abgeleitete Authentisierungsinstanz (300), wobei die Ableitungsdaten einen Ableitungsparameter beinhalten, der die Ableitung des abgeleiteten geheimen Schlüssels für die beteiligten Kommunikationspartner nachvollziehbar macht, ohne dass dieser dadurch öffentlich wird;
   Übertragen (S5) von Authentisierungsdaten an die abgeleitete Authentisierungsinstanz (300), wobei die Authentisierungsdaten die Ableitungsdaten (g1, Sig(g1)), das Zertifikat (Cert(PKO)) des öffentlichen Schlüssel (PKO) des Originaldatenträgers (100) sowie ein abgeleitetes Schlüsselpaar aufweisen, welches den abgeleiteten geheimen Schlüssel (SKA) und den öffentlichen Schlüssel (PKO) des Originaldatenträgers umfasst.

2. Verfahren nach Anspruch 1 **dadurch gekennzeichnet, dass** der öffentliche Schlüssel des Originaldatenträgers (100) in der abgeleiteten Authentisierungsinstanz (300) vorgesehen ist, um im Rahmen einer Authentisierung mit der abgeleiteten Authentisierungsinstanz (300) als der öffentliche Schlüssel (PKO) der abgeleiteten Authentisierungsinstanz (300) behandelt zu werden.

3. Verfahren nach Anspruch 1 oder 2 **dadurch gekennzeichnet, dass** das Schlüsselpaar des Originaldatenträgers (100) für eine Authentisierung nach einem ersten Authentisierungsprotokoll vorgesehen ist und das Schlüsselpaar der abgeleiteten Authentisierungsinstanz (300) für eine Authentisierung nach einem abgeleiteten Authentisierungsprotokoll vorgesehen ist, in welchem unveränderte Schritte des ersten Authentisierungsprotokolls mit dem öffentlichen Schlüssel (PKO) des Originaldatenträgers ausgeführt werden.

4. Verfahren nach einem der vorhergehenden Ansprüche, **gekennzeichnet durch** die weiteren Schritte:

◦ Auslesen (S2) von Daten aus dem Originaldatenträger (100) durch eine vertrauenswürdige Instanz (200) nach einem Authentisieren (S1) des Originaldatenträgers (100) gegenüber der vertrauenswürdigen Instanz (200);
◦ Authentisieren (S6) der abgeleiteten Authentisierungsinstanz (300) gegenüber der vertrauenswürdigen Instanz (200) unter Verwendung der übertragenen Authentisierungsdaten; und
◦ Übertragen (S7) der aus dem Originaldatenträger (100) ausgelesenen Daten an die abgeleitete Authentisierungsinstanz (300) durch die vertrauenswürdige Instanz (200).

5. Verfahren nach Anspruch 4, **dadurch gekennzeichnet, dass** der Originaldatenträger den Ableitungsparameter (g1) an die vertrauenswürdige Instanz überträgt (S4).

6. Verfahren nach einem der Ansprüche 4 oder 5, **dadurch gekennzeichnet, dass** der Originaldatenträger (100) als Ableitungsparameter eine abgeleitete Basis (g1) verwendet, die mittels einer Exponierung einer vorgegebenen Basis (g) mit dem Reziproken der Zufallszahl (RND1) gebildet und an die vertrauenswürdige Instanz übertragen wird, welche dann ein Anteil der an die abgeleitete Authentisierungsinstanz zu übertragenden Authentisierungsdaten sind.

7. Verfahren nach einem der vorhergehenden Ansprüche, **gekennzeichnet durch** den im Rahmen des Authentisierens der abgeleiteten Authentisierungsinstanz (300) gegenüber einem Authentisierungspartner (200, 400) durchgeführten Schritt des Vereinbarens eines Kommunikationsschlüssels (KKI; KKA) zwischen der abgeleiteten Authentisierungsinstanz (300) und dem Authentisierungspartner (200, 400), vorzugsweise mittels eines Diffie-Hellman-Schlüsselaustauschverfahrens, auf der Basis des öffentlichen Schlüssels (PKO) und des geheimen Schlüssels (SKA) der abgeleiteten Authentisierungsinstanz (300) sowie eines öffentlichen Sitzungsschlüssels (PKI) und eines geheimen Sitzungsschlüssels (SKI) des Authentisierungspartners (200, 400), wobei der öffentliche Sitzungsschlüssel (PKI) des Authentisierungspartners mittels Exponierung des Ableitungsparameters (g1) mit dem geheimen Sitzungsschlüssel (SKI) des Authentisierungspartners bestimmt wird.

8. Verfahren nach einem der Ansprüche 4, 5 oder 6, **gekennzeichnet durch** den im Rahmen des Authentisierens des Originaldatenträgers (100) gegenüber der vertrauenswürdigen Instanz (200) durchgeführten Schritt des Vereinbarens eines Kommunikationsschlüssels (KKO; KKI) zwischen dem Originaldatenträger (100) und der vertrauenswürdigen Instanz (200), vorzugsweise mittels eines Diffie-Hellman-Schlüsselaustauschverfahrens, auf der Basis des öffentlichen Schlüssels (PKO) und des geheimen Schlüssels (SKO) des Originaldatenträgers (100) sowie eines öffentlichen Sitzungsschlüssels (PKI) und eines geheimen Sitzungsschlüssels (SKI) der vertrauenswürdigen Instanz (200), wobei der öffentliche Schlüssel (PKO) des Originaldatenträgers (100) mittels Exponierung einer vorgegebenen Basis (g) mit dem geheimen Schlüssel (SKO) des Originaldatenträgers (100) bestimmt wird und der öffentliche Sitzungsschlüssel (PKI) der vertrauenswürdigen Instanz (200) mittels Exponierung der vorgegebenen Basis (g) mit dem geheimen Sitzungsschlüssel (SKI) der vertrauenswürdigen Instanz (200) bestimmt wird.

9. Verfahren nach einem der vorhergehenden Ansprüche 4, 5, 6, oder 8, **dadurch gekennzeichnet, dass** zum Übertragen der Authentisierungsdaten an die abgeleitete Authentisierungsinstanz (300) der Originaldatenträger (100) den geheimen Schlüssel (SKA) der abgeleiteten Authentisierungsinstanz (300) an die vertrauenswürdige Instanz überträgt (TS41) und die vertrauenswürdige Instanz (200) dann die Authentisierungsdaten an die abgeleitete Authentisierungsinstanz (300) überträgt (TS51).

10. Verfahren nach Anspruch 9, **dadurch gekennzeichnet, dass** der geheime Schlüssel (SKA) der abgeleiteten Authentisierungsinstanz (300) verschlüsselt übertragen wird und der Originaldatenträger (100) den zugehörigen Entschlüsselungsschlüssel (RND2) direkt an die abgeleitete Authentisierungsinstanz (300) überträgt.

11. Verfahren nach einem der vorhergehenden Ansprüche 4, 5, 6, 8, 9 oder 10, **dadurch gekennzeichnet, dass** zum Übertragen der Authentisierungsdaten an die abgeleitete Authentisierungsinstanz (300) die vertrauenswürdige Instanz (200) die Ableitungsdaten (g1, Sig(g1)) an den Originaldatenträger (100) überträgt und der Originaldatenträger (100) den geheimen Schlüssel (SKA) der abgeleiteten Authentisierungsinstanz (300) und die Ableitungsdaten (g1, Sig(g1)) an die abgeleitete Authentisierungsinstanz (300) überträgt.

12. Portabler Datenträger, umfassend einen Speicher, einen Prozessor und eine Datenkommunikationsschnittstelle zur Datenkommunikation mit einer externen Instanz (200; 300), **dadurch gekennzeichnet, dass** der Datenträger (100) eingerichtet ist ein Verfahren nach einem der Ansprüche 1-3, 5, oder 6 durchzuführen; oder dass eine von einem Originaldatenträger (100) abgeleitete Authentisierungsinstanz durch Durchführen eines Verfahrens nach einem der Ansprüche 1 bis 11 auf dem portablen Datenträger (100) erstellt worden ist.

**13.** Endgerät umfassend einen Speicher, einen Prozessor und eine Datenkommunikationsschnittstelle zur Datenkommunikation mit einer externen Instanz (100; 200; 400), **dadurch gekennzeichnet, dass** eine von einem Originaldatenträger (100) abgeleitete Authentisierungsinstanz (300) durch Durchführen eines Verfahrens nach einem der Ansprüche 1 bis 11 in einem virtuellen Datenträger auf dem Endgerät erstellt worden ist.

**Claims**

**1.** A method for creating an authentication entity (300) derived from an original data carrier, wherein the original data carrier has firstly a key pair that is individual to the original data carrier and comprises a public key (PKO) and a secret key (SKO) of the original data carrier (100), and secondly a certificate (Cert(PKO)) for the public key (PKO) of the original data carrier, comprising the steps of:

Deriving (S3) a secret key (SKA) for the derived authentication entity (300) from the secret key (SKO) of the original data carrier (100) by the original data carrier while employing a random number, preferably by multiplication by the random number.
Forming (TS33, S5) derivation data (g1, Sig(g1)) for the derived authentication entity (300); wherein the derivation data contain a derivation parameter which makes the derivation of the derived secret key for the involved communication partners understandable, without this thereby becoming public;
Transferring (S5) authentication data to the derived authentication entity (300), wherein the authentication data have the derivation data (g1, Sig(g1)), the certificate (Cert(PKO)) of the public key (PKO) of the original data carrier (100) as well as a derived key pair which comprises the derived secret key (SKA) and the public key (PKO) of the original data carrier.

**2.** The method according to claim 1, **characterized in that** the public key of the original data carrier (100) is provided in the derived authentication entity (300) in order to be treated as the public key (PKO) of the derived authentication entity (300) within the context of an authentication with the derived authentication entity (300).

**3.** The method according to claim 1 or 2, **characterized in that** the key pair of the original data carrier (100) is provided for an authentication according to a first authentication protocol, and the key pair of the derived authentication entity (300) is provided for an authentication according to a derived authentication protocol in which unchanged steps of the first authentication protocol are executed with the public key (PKO) of the original data carrier.

**4.** The method according to any of the preceding claims, **characterized by** the further steps of:

◦ reading (S2) data out of the original data carrier (100) by a trustworthy entity (200) after an authenticating (S1) of the original data carrier (100) to the trustworthy entity (200);
◦ authenticating (S6) the derived authentication entity (300) to the trustworthy entity (200) while employing the transferred authentication data; and
◦ transferring (S7) the data read out of the original data carrier (100) to the derived authentication entity (300) by the trustworthy entity (200).

**5.** The method according to claim 4, **characterized in that** the original data carrier transfers the derivation parameter (g1) to the trustworthy entity (S4).

**6.** The method according to any of claims 4 or 5, **characterized in that** the original data carrier (100) employs as a derivation parameter a derived base (g1) which is formed by exponentiating the given base (g) by the reciprocal of the random number (RND1) and transferred to the trustworthy entity, which are [sic] then a portion of the authentication data to be transferred to the derived authentication entity.

**7.** The method according to any of the preceding claims, **characterized by** the step, carried out within the framework of authenticating the derived authentication entity (300) to an authentication partner (200, 400), of agreeing on a communication key (KKI; KKA) between the derived authentication entity (300) and the authentication partner (200, 400), preferably by means of a Diffie-Hellman key exchange method, on the basis of the public key (PKO) and the secret key (SKA) of the derived authentication entity (300) as well as a public session key (PKI) and a secret session key (SKI) of the authentication partner (200, 400), wherein the public session key (PKI) of the authentication partner is determined by exponentiating the derivation parameter (g1) by the secret session key (SKI) of the authentication partner.

8. The method according to any of claims 4, 5 or 6, **characterized by** the step, carried out within the framework of authenticating the original data carrier (100) to the trustworthy entity (200), of agreeing on a communication key (KKO; KKI) between the original data carrier (100) and the trustworthy entity (200), preferably by means of a Diffie-Hellman key exchange method, on the basis of the public key (PKO) and the secret key (SKO) of the original data carrier (100) as well as a public session key (PKI) and a secret session key (SKI) of the trustworthy entity (200), wherein the public key (PKO) of the original data carrier (100) is determined by exponentiating a given base (g) by the secret key (SKO) of the original data carrier (100), and the public session key (PKI) of the trustworthy entity (200) is determined by exponentiating the given base (g) by the secret session key (SKI) of the trustworthy entity (200).

9. The method according to any of the preceding claims 4, 5, 6, or 8, **characterized in that** for transferring the authentication data to the derived authentication entity (300), the original data carrier (100) transfers (TS41) the secret key (SKA) of the derived authentication entity (300) to the trustworthy entity (200), and the trustworthy entity (200) then transfers (TS51) the authentication data to the derived authentication entity (300).

10. The method according to claim 9, **characterized in that** the secret key (SKA) of the derived authentication entity (300) is transferred in encrypted form, and the original data carrier (100) transfers the appurtenant decryption key (RND2) directly to the derived authentication entity (300).

11. The method according to any of the preceding claims 4, 5, 6, 8, 9 or 10, **characterized in that** for transferring the authentication data to the derived authentication entity (300), the trustworthy entity (200) transfers the derivation data (g1, Sig(g1)) to the original data carrier (100), and the original data carrier (100) transfers the secret key (SKA) of the derived authentication entity (300) and the derivation data (g1, Sig(g1)) to the derived authentication entity (300).

12. A portable data carrier comprising a memory, a processor and a data communication interface for data communication with an external entity (200; 300), **characterized in that** the data carrier (100) is devised to carry out a method according to any of claims 1-3, 5, or 6; or that an authentication entity derived from an original data carrier (100) has been created on the portable data carrier by carrying out a method according to any of claims 1 to 11.

13. An end device comprising a memory, a processor and a data communication interface for data communication with an external entity (100; 200; 400), **characterized in that** an authentication entity (300) derived from an original data carrier (100) has been created in a virtual data carrier on the end device by carrying out a method according to any of claims 1 to 11.

## Revendications

1. Procédé de création d'une instance d'authentification (300) dérivée d'un support de données d'origine, cependant que le support de données d'origine comporte une paire de clés individuelle au support de données d'origine, laquelle comprend une clé publique (PKO) et une clé secrète (SKO) du support de données d'origine (100), ainsi qu'un certificat (Cert(PKO)) relatif à la clé publique (PKO) du support de données d'origine, comprenant les étapes :

   dérivation (S3) d'une clé secrète (SKA), pour l'instance d'authentification (300) dérivée, à partir de la clé secrète (SKO) du support de données d'origine, par le support de données d'origine, en utilisant un chiffre aléatoire, de préférence par multiplication avec le chiffre aléatoire ;
   constitution (TS33, S5) de données de dérivation (g1, Sig(g1)) pour l'instance d'authentification (300) dérivée, cependant que les données de dérivation contiennent un paramètre de dérivation qui rend retraçable la dérivation de la clé secrète dérivée pour les partenaires de communication concernés sans que cette clé ne devienne par cela publique ;
   transmission (S5) de données d'authentification à l'instance d'authentification (300) dérivée, cependant que les données d'authentification comprennent les données de dérivation (g1, Sig(g1)), le certificat (Cert(PKO)) de la clé publique (PKO) du support de données d'origine (100), ainsi qu'une paire de clés dérivée qui comprend la clé secrète dérivée (SKA) et la clé publique (PKO) du support de données d'origine.

2. Procédé selon la revendication 1, **caractérisé en ce que** la clé publique du support de données d'origine (100) est prévue dans l'instance d'authentification (300) dérivée pour, dans le cadre d'une authentification avec l'instance d'authentification (300) dérivée, être traitée en tant que la clé publique (PKO) de l'instance d'authentification (300) dérivée.

**3.** Procédé selon la revendication 1 ou 2, **caractérisé en ce que** la paire de clés du support de données d'origine (100) est prévue pour une authentification suivant un premier protocole d'authentification, et que la paire de clés de l'instance d'authentification (300) dérivée est prévue pour une authentification suivant un protocole d'authentification dérivé dans lequel des étapes inchangées du premier protocole d'authentification sont exécutées avec la clé publique (PKO) du support de données d'origine.

**4.** Procédé selon une des revendications précédentes, **caractérisé par** les autres étapes :

- lecture (S2) de données depuis le support de données d'origine (100) par une instance fiable (200) après une authentification (S1) du support de données d'origine (100) vis-à-vis de l'instance fiable (200) ;
- authentification (S6) de l'instance d'authentification (300) dérivée vis-à-vis de l'instance fiable (200) en utilisant les données d'authentification transmises ; et
- transmission (S7) des données lues depuis le support de données d'origine (100) à l'instance d'authentification (300) dérivée, par l'instance fiable (200).

**5.** Procédé selon la revendication 4, **caractérisé en ce que** le support de données d'origine transmet (S4) le paramètre de dérivation (g1) à l'instance fiable.

**6.** Procédé selon une des revendications 4 ou 5, **caractérisé en ce que** le support de données d'origine (100) utilise, en tant que paramètre de dérivation, une base dérivée (g1) qui est constituée au moyen d'une exposition d'une base prédéterminée (g) à la réciproque du chiffre aléatoire (RND1) et est transmise à l'instance fiable, laquelle sont alors une partie des données d'authentification à transmettre à l'instance d'authentification dérivée.

**7.** Procédé selon une des revendications précédentes, **caractérisé par** l'étape, effectuée dans le cadre de l'authentification avec l'instance d'authentification (300) dérivée vis-à-vis d'un partenaire d'authentification (200, 400), de l'accord sur une clé de communication (KKI; KKA) entre l'instance d'authentification (300) dérivée et le partenaire d'authentification (200, 400), de préférence au moyen d'un procédé d'échange de clés Diffie-Hellman, sur la base de la clé publique (PKO) et de la clé secrète (SKA) de l'instance d'authentification (300) dérivée ainsi que d'une clé de session (PKI) publique et d'une clé de session (SKI) secrète du partenaire d'authentification (200, 400), cependant que la clé de session (PKI) publique du partenaire d'authentification est déterminée par exposition du paramètre de dérivation (gI) à la clé de session (SKI) secrète du partenaire d'authentification.

**8.** Procédé selon une des revendications 4, 5 ou 6, **caractérisé par** l'étape, effectuée dans le cadre de l'authentification du support de données d'origine (100) vis-à-vis de l'instance fiable (200), de l'accord sur une clé de communication (KKO; KKI) entre le support de données d'origine (100) et l'instance fiable (200), de préférence au moyen d'un procédé d'échange de clés Diffie-Hellman, sur la base de la clé publique (PKO) et de la clé secrète (SKO) du support de données d'origine (100) ainsi que d'une clé de session (PKI) publique et d'une clé de session (SKI) secrète de l'instance fiable (200), cependant que la clé publique (PKO) du support de données d'origine (100) est déterminée par exposition d'une base prédéterminée (g) à la clé secrète (SKO) du support de données d'origine (100) et que la clé de session (PKI) publique de l'instance fiable (200) est déterminée par exposition de la base prédéterminée (g) à la clé de session (SKI) secrète de l'instance fiable (200).

**9.** Procédé selon une des revendications précédentes 4, 5, 6 ou 8, **caractérisé en ce que**, pour la transmission des données d'authentification à l'instance d'authentification (300) dérivée, le support de données d'origine (100) transmet (TS41) la clé secrète (SKA) de l'instance d'authentification (300) dérivée à l'instance fiable et que l'instance fiable (200) transmet (TS51) ensuite les données d'authentification à l'instance d'authentification (300) dérivée.

**10.** Procédé selon la revendication 9, **caractérisé en ce que** la clé secrète (SKA) de l'instance d'authentification (300) dérivée est transmise sous forme cryptée, et que le support de données d'origine (100) transmet la clé de décryptage (RND2) correspondante directement à l'instance d'authentification (300) dérivée.

**11.** Procédé selon une des revendications précédentes 4, 5, 6, 8, 9 ou 10, **caractérisé en ce que**, pour la transmission des données d'authentification à l'instance d'authentification (300) dérivée, l'instance fiable (200) transmet les données de dérivation (g1, Sig(g1)) au le support de données d'origine (100), et que le support de données d'origine (100) transmet la clé secrète (SKA) de l'instance d'authentification (300) dérivée et les données de dérivation (g1, Sig(g1)) à l'instance d'authentification (300) dérivée.

**12.** Support de données portable comprenant une mémoire, un processeur et une interface de communication de données pour la communication de données avec une instance externe (200, 300), **caractérisé en ce que** le support de données (100) est conçu pour effectuer un procédé selon une des revendications 1-3, 5 ou 6 ; ou qu'une instance d'authentification dérivée d'un support de données d'origine (100) a été, par exécution d'un procédé selon une des revendications de 1 à 11, créée sur le support de données portable (100).

13. Terminal comprenant une mémoire, un processeur et une interface de communication de données pour la communication de données avec une instance externe (100; 200; 400), **caractérisé en ce qu'**une instance d'authentification (300) dérivée d'un support de données d'origine (100) a été, par exécution d'un procédé selon une des revendications de 1 à 11, créée sur un support de données virtuel sur le terminal.

**100**          **200**          **300**          **400**

BANK

S1

Authentisierung

S2

Auslesen Daten

S3

Schlüsselableitung und
Signaturerstellung

S4

Schlüssel,
Signatur und
Ableitungsdaten

S5

Authentisierungsdaten

S6

Authentisierung

S7

Einbringen
Daten

S8

Authentisierung

S9

Transaktion

# Fig. 1

**100** **200**

TS11

$$PKO:=g^{\wedge}SKO;\ Cert(PKO)$$

TS12

$$PKI:=g^{\wedge}SKI;\ ACV$$

TS13

$$KKO:=PKI^{\wedge}SKO$$

TS14

$$KKI:=PKO^{\wedge}SKI$$

## Fig. 2

**100**

TS31

Erzeuge Zufallszahl RND1

TS32

Leite Schlüssel ab:
$$SKA:=SKO{\cdot}RND1$$

TS33

Bestimme Ableitungsparameter:
$$g1:=g^{\wedge}(1/RND1)$$

TS34

Erstelle Signatur Sig(g1)
unter Verwendung des Schlüssels SKO

TS35

Erzeuge Zufallszahl RND2

TS36

Verschlüssle SKA:
$$ENC(SKA;\ RND2)$$

## Fig. 3

| 100 | 200 | 300 |
|-----|-----|-----|

**TS41**

ENC(SKA;RND2); g1

**TS42**

RND2

## Fig. 4

| 200 | 300 |
|-----|-----|

**TS51**

Authentisierungsdaten:
· ENC(SKA;RND2)
· g1, Sig(g1), g
· PKO, Cert(PKO)

**TS52**

Applet_VMC

**TS53**

Entschlüssle SKA:
DEC(ENC(SKA;RND2);RND2):=SKA

## Fig. 5

**200**

**300**

TS61

| PKI:=g1^SKI |
|---|

TS62

| PKA:=PKO |
|---|

TS63

| PKI |
|---|

TS64

| PKA; Cert(PKO); Sig(g1); g |
|---|

TS65

| KKI:=PKA^SKI |
|---|

TS66

| KKA:=PKI^SKA |
|---|

TS67

| Überprüfe Signatur: Ver(Sig(g1)) |
|---|

**Fig. 6**

**300**

**400**

BANK

TS81

PKA; g1; Sig(g1); g; Cert(PKO)

TS82

$PKD := g1^{SKD}$

TS83

PKD

TS84

$KKA := PKD^{SKA}$

TS85

$KKD := PKA^{SKD}$

TS86

Überprüfe Signatur:
Ver(Sig(g1))

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1113617 A

**In der Beschreibung aufgeführte Nicht-Patentliteratur**

- **TANENBAUM A S et al.** *Distributed Systems - Principles and Paradigms*

- **A. MENEZES, P. ; VAN OORSCHOT ; S. VAN-STONE.** Handbook of Applied Cryptography. 1997